Europäisches Patentamt

European Patent Office

Office européen des brevets

(11) Numéro de publication: **0 404 701**

**A1**

# (12) DEMANDE DE BREVET EUROPEEN

(21) Numéro de dépôt: 90420295.9

(51) Int. Cl.⁵: **G01P 3/487**

(22) Date de dépôt: **22.06.90**

(30) Priorité: **23.06.89 FR 8908656**

(43) Date de publication de la demande:
**27.12.90 Bulletin 90/52**

(84) Etats contractants désignés:
**AT DE ES FR GB IT**

(71) Demandeur: **EATON S.A.M.**
**17 Avenue Prince Héréditaire Albert**
**MC-98000 Monaco(MC)**

(72) Inventeur: **Corbier, Jean Paul**
**16 avenue du Professeur Langevin**
**F-06240 Beausoleil(FR)**
Inventeur: **Cremers, Michel**
**La Chaumière, Gorbio**
**F-06500 Menton(FR)**

(74) Mandataire: **Bratel, Gérard et al**
**Cabinet GERMAIN & MAUREAU B.P. 3011**
**F-69392 Lyon Cédex 03(FR)**

(54) **Capteur de rotation à effet Hall.**

(57) Le capteur est constitué d'une couronne aimantée (1) qui est liée en rotation avec l'organe dont la rotation doit être détectée et qui passe devant un détecteur de champ magnétique à effet Hall (3). La périphérie de la couronne (1) présente une alternance de pôles magnétiques Nord et Sud, tandis que le détecteur (3) possède une sortie logique (U) qui prend un état haut quand le champ magnétique traversant ce détecteur est supérieur à un seuil positif, et passe à l'état bas si le champ magnétique devient inférieur à un seuil négatif. Pour augmenter l'hystérésis du capteur, les pôles magnétiques sont séparés les uns des autres par des zones magnétiquement neutres, pouvant être réalisées par des encoches radiales (5) auquel cas les pôles sont constitués par des dents (4).

Application particulière : capteur de vitesse pour véhicule automobile.

FIG.4

La présente invention concerne un capteur de rotation à effet Hall, pouvant constituer notamment, mais non exclusivement, un capteur de vitesse pour véhicule automobile.

Les capteurs de vitesse utilisant l'effet Hall sont connus, et sont généralement constitués d'une couronne aimantée qui est liée en rotation avec un organe dont on désire détecter la rotation et qui passe devant un détecteur de champ magnétique à effet Hall. La périphérie de la couronne aimantée présente une alternance de pôles magnétiques Nord et Sud. Le détecteur à effet Hall comportant un circuit intégré, possède une sortie logique qui prend un premier état, tel qu'un état haut, quand le champ magnétique traversant ce détecteur est supérieur à un certain seuil positif. A l'inverse, la sortie logique du détecteur passe à un autre état, tel qu'un état bas, si le champ magnétique le traversant devient inférieur à un certain seuil négatif. Une réalisation typique est décrite dans le document FR-A-2 512 208, et illustrée par la figure 1 de ce document.

Lors de la rotation de la couronne aimantée, l'amplitude du champ qui agit sur le détecteur varie sinusoïdalement, à une fréquence dépendant de la vitesse de rotation, et cette amplitude dépend aussi du volume de l'aimant annulaire et de la distance à laquelle est placé le détecteur. La sortie du détecteur oscille donc à la même fréquence entre l'état haut et l'état bas quand la couronne aimantée tourne, à condition que le champ magnétique franchisse alternativement les seuils de déclenchement positif et négatif.

Les dispositifs de ce genre étant soumis à des influences démagnétisantes diverses (température, forces contre-magnétomotrices dues à des courants voisins...), il est nécessaire d'utiliser un aimant annulaire délivrant un champ surdimensionné par rapport aux seuils de déclenchement, relativement faibles, du détecteur à effet Hall.

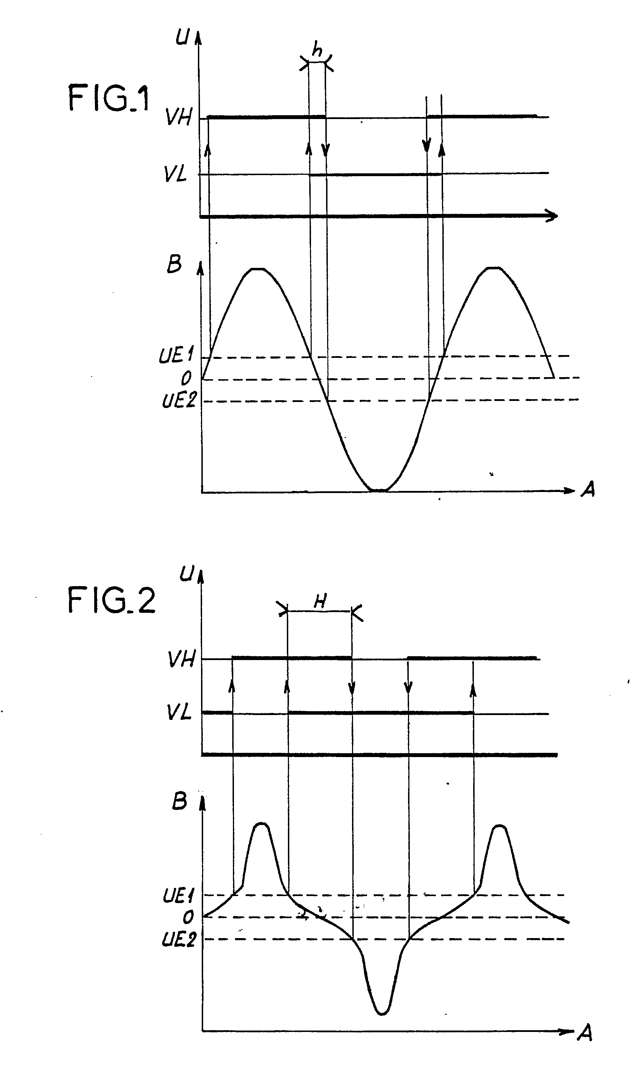

Lorsque la couronne aimantée est positionnée angulairement de telle façon que le champ a une valeur proche de l'un des seuils, une faible variation de l'angle de rotation A entraîne le basculement du détecteur a effet Hall. Ce phénomène est illustré par le diagramme de la figure 1, dans lequel :
- la partie inférieure représente la variation sinusoïdale du champ magnétique B en fonction de l'angle de rotation A, les seuils de déclenchement positif et négatif étant indiqués respectivement par UE1 et UE2;
- la partie supérieure indique l'état de sortie correspondant (tension électrique U) du détecteur à effet Hall, VH étant le niveau haut et VL le niveau bas.

Ce phénomène occasionne pour l'utilisateur une perturbation, en ce sens que des jeux d'assemblage des organes mécaniques, ou de simples vibrations de l'axe de rotation, donc de l'aimant annulaire, peuvent faire changer l'état de sortie du détecteur à effet Hall, alors que la couronne aimantée n'a pas réellement tourné. On peut résumer le phénomène nuisible ici mis en évidence, en affirmant que les capteurs de rotation actuels possèdent une faible hystérésis h.

La présente invention vise à pallier ce défaut des dispositifs actuels, en fournissant un capteur de rotation du genre ici considéré qui possède une hystérésis augmentée, grâce à laquelle les risques de basculement de l'état de sortie provoqués par de simples vibrations de l'axe de l'aimant sont éliminés.

A cet effet, l'invention a pour objet un capteur de rotation à effet Hall, du genre précisé en introduction, dans lequel la couronne aimantée présente, à sa périphérie, des zones aimantées constituant les pôles magnétiques alternativement Nord et Sud qui sont séparées les unes des autres, dans le sens circonférentiel, par des zones magnétiquement neutres, de manière à augmenter l'hystérésis du capteur de rotation.

Selon une forme de réalisation de l'invention, la couronne aimantée présente, à sa périphérie, une série de dents qui constituent les pôles alternativement Nord et Sud et qui sont séparées les unes des autres par des encoches radiales réalisant les zones magnétiquement neutres.

Dans une variante de l'invention, plus simple du point de vue des formes, la couronne aimantée conserve une périphérie lisse mais présente, sur cette périphérie lisse, une alternance de zones aimantées, constituant les pôles magnétiques alternativement Nord et Sud, et de zones de séparation magnétiquement neutres.

Grâce aux particularités de la couronne aimantée, l'amplitude du champ magnétique traversant le détecteur à effet Hall est légèrement diminuée en valeur, mais la variation du champ magnétique B en fonction de l'angle de rotation A n'est plus sinusoidale comme le montre la partie inférieure du diagramme de la figure 2, l'onde est aplatie de part et d'autre du passage par la valeur zéro. En d'autres termes, les fronts montants et descendants du champ créé par la couronne sont écartés angulairement. Plus particulièrement, dans le cas d'une couronne aimantée avec dents et encoches, ces modifications du champ sont dues aux variations d'entrefer entre les parties magnétiques et le détecteur à effet Hall, selon qu'une dent ou une encoche de la couronne aimantée se situe en face du détecteur.

Dans ces conditions, lorsque la couronne dentée aimantée est positionnée angulairement de telle façon que le champ B a une valeur proche de l'un des seuils de déclenchement UE1 ou UE2 du détecteur, une variation importante de l'angle de rotation A par exemple d'au moins 10°, est nécessaire pour faire basculer l'état de sortie du détecteur. Ce comportement modifié du détecteur est illustré dans la partie supérieure du diagramme de la figure 2, où H désigne l'hystérésis augmentée (à comparer avec la faible hystérésis h des capteurs actuels). On comprend que l'angle de rotation nécessaire au basculement de l'état de sortie est nettement superieur aux angles d'oscillations caractérisant de simples vibrations de l'axe de la couronne, de sorte qu'on évite le basculement intempestif du détecteur.

De toute façon, l'invention sera mieux comprise à l'aide de la description qui suit, en référence au dessin schématique annexé représentant, à titre d'exemple non limitatif, une forme d'exécution de ce capteur de rotation à effet Hall :

Figure 3 est une vue en perspective d'un capteur de rotation de structure connue ;

Figure 4 est une vue en perspective d'un capteur de rotation conforme à la présente invention.

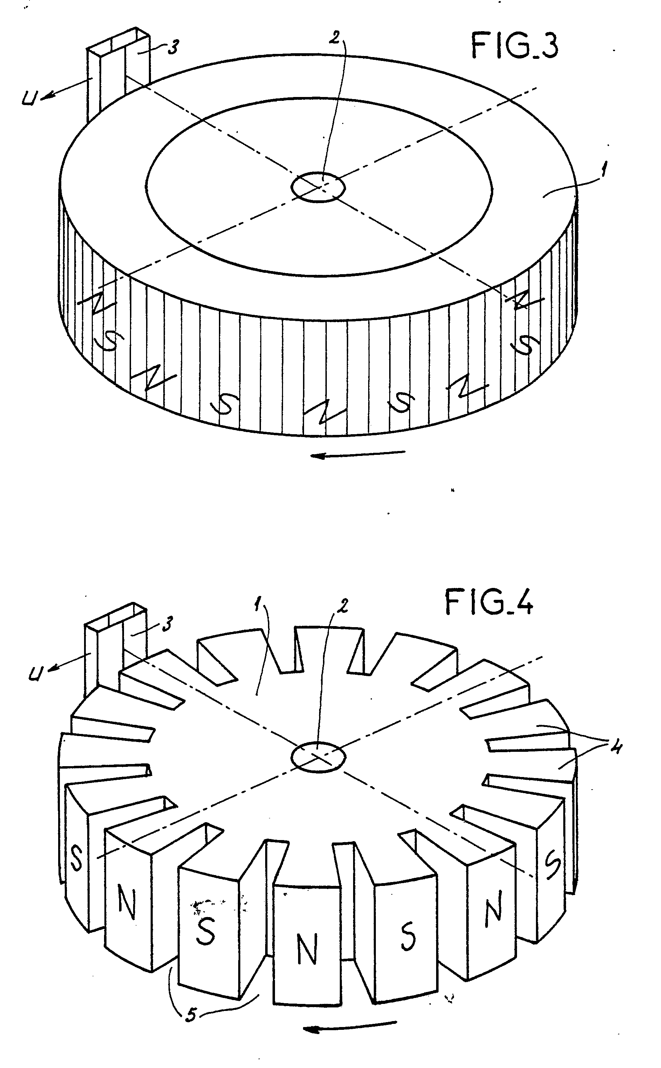

La figure 3 montre un capteur de rotation selon la technique antérieure, avec un aimant annulaire tournant 1 à périphérie lisse, porte par un axe 2 qui est lui-même lié en rotation à un organe, non représenté, dont un désire détecter la rotation. L'aimant annulaire 1 présente une alternance de pôles magnétiques Nord et Sud, non séparés les uns des autres, qui passent devant un détecteur fixe 3 à effet Hall, sensible au champ magnétique de l'aimant 1 et délivrant un signal de sortie sous forme d'une tension électrique U. Il s'agit plus particulièrement d'un signal de sortie logique, oscillant entre un niveau haut et un niveau bas à une fréquence proportionnelle à la vitesse de rotation de l'axe 2. Comme on l'a expliqué plus haut, ce dispositif connu comporte l'inconvénient d'un risque de basculement du signal de sortie U du détecteur 3, en cas de simples vibrations de faible amplitude de l'axe 2.

Cet inconvénient est évité avec le capteur de rotation selon l'invention, représenté à la figure 4. Dans ce capteur perfectionné, la couronne aimantée 1 liée en rotation à l'axe 2 présente, à sa périphérie, une série de dents 4 qui sont séparées les unes des autres par des encoches radiales 5, d'une certaine profondeur. Les dents 4 constituent ici les pôles magnétiques alternativement Nord et Sud, qui défilent devant le détecteur fixe 3 à effet Hall lors de la rotation de la couronne aimantée 1. Grâce à la configuration de cette couronne aimantée 1, une variation importante de l'angle de rotation est nécessaire pour faire basculer le signal de sortie U du détecteur 3, comme expliqué plus haut en référence au diagramme de la figure 2.

Le capteur de rotation selon l'invention, qui vient d'être décrit, peut constituer un capteur de vitesse monté sur un véhicule automobile ; plus particulièrement la couronne aimantée 1 peut être liée en rotation avec un organe de la boîte de vitesse du véhicule concerné, de telle sorte que cette couronne 1 se met à tourner dès que le véhicule se déplace. Le capteur délivre à sa sortie un signal U qui oscille par exemple entre un niveau haut de 12 volts et un niveau bas de 0 voit, à une fréquence proportionnelle à la vitesse du véhicule. Le signal U peut être envoyé vers une entrée d'un calculateur de bord, qui traite l'information de vitesse pour divers usages commande de la boîte de vitesse, réglage du ralenti, commande d'injection, etc...

Comme il va de soi, l'invention ne se limite pas à la seule forme d'exécution de ce capteur de rotation à effet Hall qui a été décrite ci-dessus, à titre d'exemple; elle en embrasse, au contraire, toutes les variantes de réalisation et d'application respectant le même principe, et procurant par conséquent les mêmes résultats et avantages. C'est ainsi, notamment, que les encoches radiales 5 séparant les dents 4 peuvent être remplacées sans inconvénients par des zones de séparation magnétiquement neutres, qui permettent aussi d'obtenir les conditions de fonctionnement illustrées par le diagramme de la figure 2, la périphérie de la couronne aimantée possédant alors un aspect lisse.

**Revendications**

1. Capteur de rotation à effet Hall, constitué d'une couronne aimantée (1) qui est liée en rotation avec un organe dont la rotation doit être détectée et qui passe devant un détecteur de champ magnétique à effet Hall (3), la périphérie de la couronne (1) présentant une alternance de pôles magnétiques Nord et Sud, tandis que le détecteur à effet Hall (3) possède une sortie logique (U) qui prend un premier état, tel qu'un état haut (VH), quand le champ magnétique (B) traversant ce détecteur (3) est superieur à un certain seuil positif (UE1) et qui passe à un autre état, tel qu'un état bas (VL), si le champ magnétique (B) le traversant devient inférieur à un certain seuil négatif (UE2), caractérisé en ce que la couronne aimantée (1) présente, à sa périphérie des zones aimantées (4) constituant les pôles magnétiques alternativement Nord et Sud qui sont séparées les unes des autres, dans le sens circonférentiel, par des zones magnétiquement neutres (5), de manière à augmenter l'hystérésis (H) du capteur de rotation.

2. Capteur de rotation à effet Hall selon la revendication 1, caractérisé en ce que la couronne aimantée (1) présente, à sa périphérie, une série de dents (4) qui constituent les pôles magnétiques alternativement Nord et Sud et qui sont séparées les unes des autres par des encoches radiales (5) réalisant les zones magnétiquement neutres.

3. Capteur de rotation à effet Hall selon la revendication 1, caractérisé en ce que la couronne aimantée (1) est lisse et présente une alternance de zones aimantées, constituant les pôles magnétiques alternativement Nord et Sud, et de zones de séparation magnétiquement neutres.

4. Capteur de rotation à effet Hall selon l'une quelconque des revendications 1 à 3, caractérisé en ce qu'il constitue un capteur de vitesse pour véhicule automobile, plus particulièrement avec la couronne dentée aimantée (1) liée en rotation avec un organe de la boîte de vitesse du véhicule.

FIG.1

FIG.2

EP 0 404 701 A1

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | US-A-4107561 (SCHMIDT)<br>* colonne 2, lignes 4 - 32 *<br>* colonne 4, lignes 1 - 2; figure 2 *<br>--- | 1-3 | G01P3/487 |
| Y | US-A-3230407 (MARSH)<br>* colonne 1, lignes 25 - 71 *<br>* colonne 3, ligne 41 - colonne 4, ligne 34; figures 1-4 *<br>--- | 1-3 | |
| A,D | FR-A-2512208 (BOSCH)<br>* page 1, lignes 1 - 13 *<br>* page 1, ligne 35 - page 2, ligne 39; figures 1, 2 *<br>--- | 1 | |
| A | EP-A-59763 (FUJITSU FANUC)<br>* page 1, ligne 32 - page 2, ligne 2 *<br>* page 2, ligne 33 - page 3, ligne 26; figures 1, 3 *<br>--- | 1 | |
| A | ELECTRONIQUE INDUSTRIELLES.<br>vol. 1980, no. 4, 15 octobre 1980, PARIS FR<br>pages 85 - 88; Soussi:<br>"Des capteurs industriels économiques et simples d'emploi:les capteurs à effet Hall"<br>* page 85, colonne 1, alinéa 2 *<br>* page 86, alinéa 3 - page 87, alinéa 1; figures 1, 6 *<br>----- | 1 | DOMAINES TECHNIQUES RECHERCHES (Int. Cl.5 )<br><br>G01P |

Le présent rapport a été établi pour toutes les revendications

| Lieu de la recherche | Date d'achèvement de la recherche | Examinateur |
|---|---|---|
| LA HAYE | 11 SEPTEMBRE 1990 | ROBINSON M.A. |